(19) Europäisches Patentamt
European Patent Office
Office européen des brevets

(11) **EP 2 549 725 B1**

(12) **EUROPEAN PATENT SPECIFICATION**

(45) Date of publication and mention
of the grant of the patent:
**04.09.2019 Bulletin 2019/36**

(51) Int Cl.:
*G06F 3/0482* *(2013.01)*     *H04M 1/725* *(2006.01)*
*G06F 3/0481* *(2013.01)*

(21) Application number: **12175838.7**

(22) Date of filing: **11.07.2012**

(54) **Method of arranging user interface objects in a portable terminal and an apparatus thereof**

Verfahren zur Anordnung von Objekten einer Benutzerschnittstelle in einem tragbaren Endgerät und Vorrichtung dafür

Procédé d'agencement d'objets d'interface utilisateur dans un terminal portable et appareil associé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2011 KR 20110073081**

(43) Date of publication of application:
**23.01.2013 Bulletin 2013/04**

(73) Proprietor: **Samsung Electronics Co., Ltd.
Suwon-si, Gyeonggi-do, 443-742 (KR)**

(72) Inventor: **O, Seung-Hun
443-742 Gyeonggi-do (KR)**

(74) Representative: **Nederlandsch Octrooibureau
P.O. Box 29720
2502 LS The Hague (NL)**

(56) References cited:
**EP-A1- 2 154 602**     **US-A1- 2010 062 811**
**US-A1- 2011 138 328**

EP 2 549 725 B1

**Description**

**BACKGROUND OF THE INVENTION**

1. Field of the Invention

The present invention relates to a method and apparatus for arranging a user interface object in a portable terminal. More particularly, the present invention relates to a method and apparatus for arranging a user interface object by considering personalization.

2. Description of the Related Art

With the development of electronics communication industries in recent years, an electronic apparatus such as a mobile communication terminal (or a cellular phone), an electronics organizer, a Personal Digital Assistant (PDA), etc., has become a necessity of modern life.

As is well known in the prior art, recently developed portable terminals employ a Graphic User Interface (GUI) to provide a user with a convenient input mechanism. For example, the portable terminal displays an icon on a display screen for executing a built-in program. Occasionally, the user may have difficulty in finding a frequently-used icon from among a plurality of icons. Although the portable terminal typically provides a function by which the user can directly arrange the icons on the screen, the user has to inconveniently arrange individual icons.

US 2010/062811 A1 discloses storing the selection frequency of each menu item in the form of database in the memory. The database may store a selection frequency of each menu item by term or time slot. The controller determines a selection frequency of each menu item with reference to the information stored in the memory and displays the menu items with a high selection frequency at a particular region of the display module according to their priority.

EP 2 154 602 A1 discloses a mobile communication terminal that stores condition data for applications that display a window. Condition data is data describing for applications, an application (namely, a window), an attribute of a location associated with the application, and a frequency at which the application has been executed. The mobile communication terminal, if plural overlapping windows are displayed, determines a window to be displayed on top, using the condition data.

US 2011/138328 A1 discloses a method for arranging icons in an electronic device. The electronic device includes a storage unit storing a table recording icons provided by the electronic device and the number of click frequency of each of the icons. The method includes recording which of the icons is clicked and updating the number of click frequency of the clicked icon in the table, further causing the number of click frequency of the clicked icon to increase one if the icon is clicked. Then, arranging some of the icons according to the number of click frequency recorded in the table if a currently run application is closed.

**SUMMARY OF THE INVENTION**

Aspects of the invention are defined by the independent claims. The dependent claims define advantageous embodiments.

It is an object of the present invention to solve at least the above-mentioned problems and/or disadvantages and to provide at least the advantages described below. Accordingly, it is a further object of the present invention to provide a method and apparatus for automatically arranging a user interface object (i.e., an icon, etc.) by considering a user characteristic in a portable terminal.

It is a further object of the present invention to provide a method and apparatus for arranging a user interface object by considering personalization in a portable terminal.

It is a further object of the present invention to provide a method and apparatus for arranging a user interface object by considering a usage history in a portable terminal.

In accordance with a first aspect of the present invention this object is achieved by providing a method of arranging a user interface object on a screen in a portable terminal. The method comprises storing and updating a usage history of a plurality of programs respectively associated with the user interface objects during a pre-set time period according to at least one time-related and/or place-related criterion, selecting a selected criterion from the at least one time-related or the at least one place-related criterion, and determining an arrangement position of each user interface object corresponding to each program by referencing the usage history stored and updated with respect to the selected criterion wherein the usage history includes an amount of usage time and a number of manipulations of each program after the program is executed upon selecting the associated user interface object.

In accordance with a second aspect of the present invention, this object is achieved by providing a portable terminal wherein the portable terminal comprises an input unit for inputting data, a display unit for outputting display data, a storage unit for storing data, a location information receiver for receiving location information, and a controller for controlling an overall operation, wherein the controller is further arranged to store and update a usage history of a plurality of programs respectively associated with user interface objects during a pre-set time period according to at least one time-related and/or place-related criterion, to select a selected criterion from the at least one time-related or the at least one place-related criterion, and to determine an arrangement position of a user interface object corresponding to each program by referencing the usage history stored and updated with respect to the selected criterion wherein the usage history includes an amount of usage time and a number of manipulations of each program after the program is executed upon selecting the associated user interface object.

In accordance with a further aspect of the invention this object is achieved by providing a computer program product, which is stored on a computer readable storage media, and which is suitable to perform the method according to claim 1 to 12, when it is run on a portable terminal.

Further advantageous embodiments of the invention are defined in the dependent claims.

## BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1 is a block diagram of a portable terminal according to an exemplary embodiment of the present invention;
FIG. 2 illustrates a screen on which icons are arranged in a portable terminal according to the exemplary embodiment of the present invention;
FIG. 3 is a table illustrating an amount of usage time of each program according to a first exemplary embodiment of the present invention;
FIG. 4 illustrates an arrangement configuration of each program with reference to FIG. 3;
FIGS. 5A-5C illustrate screens on which icons corresponding to respective programs are arranged with reference to FIG. 4;
FIG. 6 illustrates the number of manipulations of each program according to a second exemplary embodiment of the present invention;
FIG. 7 illustrates an arrangement configuration of each program with reference to FIG. 6;
FIGS. 8A-8C illustrate screens on which icons corresponding to respective programs are arranged with reference to FIG. 7;
FIG. 9 illustrates an arrangement of icons corresponding to respective programs with reference to FIG. 4 and FIG. 7;
FIG. 10 illustrates an arrangement of icons corresponding to respective programs with reference to FIGS. 5A-5C;
FIG. 11 illustrates an arrangement of icons corresponding to respective programs with reference to FIG. 9; and
FIG. 12 is a flowchart illustrating a process of arranging a user interface object according to the exemplary embodiment of the present invention.

## DETAILED DESCRIPTION OF THE INVENTION

Preferred embodiments of the present invention will be described herein below with reference to the accompanying drawings. This invention may, however, be embodied in many different forms and should not be construed as limited to the exemplary embodiments set forth herein. In the following description, well-known functions or constructions are not described in detail since they would obscure the invention in unnecessary detail. Also, the terms used herein are defined according to the functions of the present invention. Thus, the terms may vary depending on user's or operator's intention and usage. That is, the terms used herein must be understood based on the descriptions made herein. The principles and features of this invention may be employed in varied and numerous embodiments without departing from the scope of the appended claims.

Furthermore, although the drawings represent exemplary embodiments of the invention, the drawings are not necessarily to scale and certain features may be exaggerated or omitted in order to more clearly illustrate and explain the present invention.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among terms set forth herein, data refers to any kind of information processed by the device, including text and/or images received from any external entities, messages transmitted or received, and information created when a specific function is executed by the device.

The present invention relates to a method and apparatus for arranging a user interface object in a portable terminal. More particularly, the present invention relates to a method and apparatus for arranging a user interface object by considering personalization. The user interface object (i.e., an icon) is automatically arranged by considering a usage history according to an exemplary embodiment of the present invention.

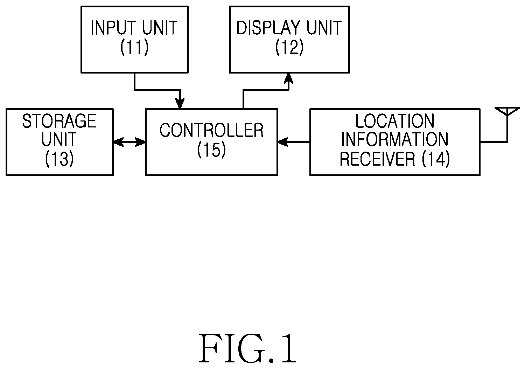

FIG. 1 is a block diagram of a portable terminal according to an exemplary embodiment of the present invention.

Referring to FIG. 1, the portable terminal of the present invention includes an input unit 11 for inputting data, a display unit 12 for outputting display data, a storage unit 13 for storing data, a location information receiver 14 for receiving location information, and a controller 15 for controlling the overall operation of the portable terminal.

The input unit 11 outputs an input signal to the controller 15 when a button configured in hardware and/or software is pressed. That is, the button may be physically implemented on the input unit 11, with pressing of the button activating corresponding button software for generating the input signal accordingly. Alternatively or in addition, the button may be implemented using a touch screen incorporated into the display unit 12, with pressing of a specific location on the touch screen activating corresponding software such as a graphic user interface (GUI) for generating the input signal accordingly. The display unit 12 displays the display data corresponding to the input signal under the control of the controller 15. The storage unit 13 stores a specific program for controlling the overall operation of the portable terminal and a variety of data that is input and output when performing a control operation of the portable terminal. The location information receiver 14 receives information indicating a location of the portable terminal, and can use a Global Positioning System (GPS) or other location gathering systems. The controller 15 provides overall control of the portable terminal. A method of arranging a user interface object using the controller 15 will be described with reference to the accompanying drawings according to the exemplary embodiment of the present invention.

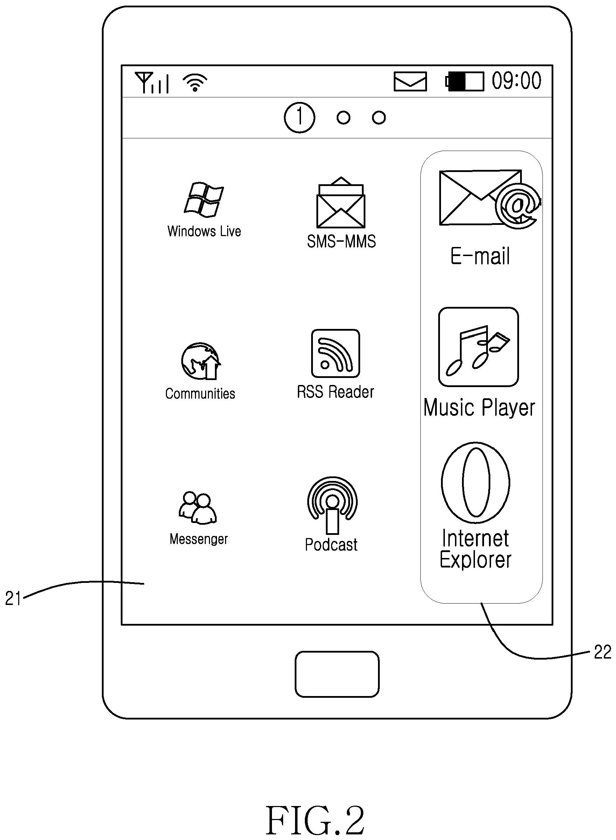

FIG. 2 illustrates the portable terminal having a screen 21 on which user interface objects, such as icons including example icons 22, are arranged according to the exemplary embodiment of the present invention. As shown in FIG. 2, example icons include an E-mail icon, a music player icon, and an Internet browser icon such as for accessing "INTERNET EXPLORER", a browser application commercially available from "MICROSOFT CORPORATION". A user interface object is used to designate a target such as a program, function, or application to be executed. A representative example of the user interface object may include known icons such as an envelope-shaped icon for accessing mail functions or applications. A specific program, function, or application is executed upon pressing the icon. The present invention is not limited thereto, and thus in a broadcasting and receiving portable terminal, some user interface objects may designate and/or access broadcasting channels.

Referring to FIG. 2, the portable terminal according to the exemplary embodiment of the present invention rearranges icons 22 on the screen 21 by considering a usage history of each program corresponding to its respective icon. As will be described below, a higher priority is assigned to icons of programs which are executed (or used) for a relatively long time or are manipulated by the user many times after executing the programs. According to the determined priorities, the icons 22 are rearranged on the screen 21. For example, an icon of a program having a great number of manipulations is arranged in a rightward portion of the screen 21, such as the E-mail, music player, and browser icons. In addition, an icon of a program which is used for a long time is arranged in an upper portion of the screen 21, such as the E-mail icon. The number of manipulations is the number of times that an input signal is generated when the user presses a button or the like to use a program after the program is executed. In addition, the icons 22 can be displayed such that the higher the priority of the icon, the more noticeable the icon is displayed; for example, by increasing the size or changing the color of the icon. For example, as shown in FIG. 2, the icons 22 for E-mail, the music player, and the browser are noticeably larger than the other icons displayed on the screen 21.

The portable terminal can store and update a usage history (e.g., an amount of usage time, the number of manipulations, etc.) of programs designated by their respective icons according to at least one criterion. A time period for storing and updating the usage history can be set to one week, one month, one year, etc. For example, when the time period for storing and updating the usage history is set to one week, icons can be rearranged in a current week on the basis of a usage history of a previous week. In another example, icons can be rearranged on the basis of a usage history from one week before.

The criterion of storing and updating the usage history of programs designated by the respective icons may be a time-related criterion and/or a place-related criterion. In a first example, the time-related criterion may be any one of a full time period, a time slot (e.g., 6:00-12:00, a weekday, a holiday, etc.), and a day of the week. In a second example, the place-related criterion may be a home, an office, etc. To configure the place-related criterion, the portable terminal can recognize a location, and a range having a specific radius about the recognized location can be defined as a place such as the home, the office, etc.

When the time-related criterion or the place-related criterion is selected (or satisfied), the portable terminal can automatically rearrange icons in accordance with the selected criterion. For example, when the time slot changes, the portable terminal automatically rearranges an icon by using a usage history for the changed time slot. In addition, when a portable terminal located in an office is moved to a home, the portable terminal automatically rearranges an icon by using a usage history for the home. As described above, icons of frequently-used programs are automatically arranged according to a user's life style and characteristics, which provides convenience to the user to operate the portable terminal.

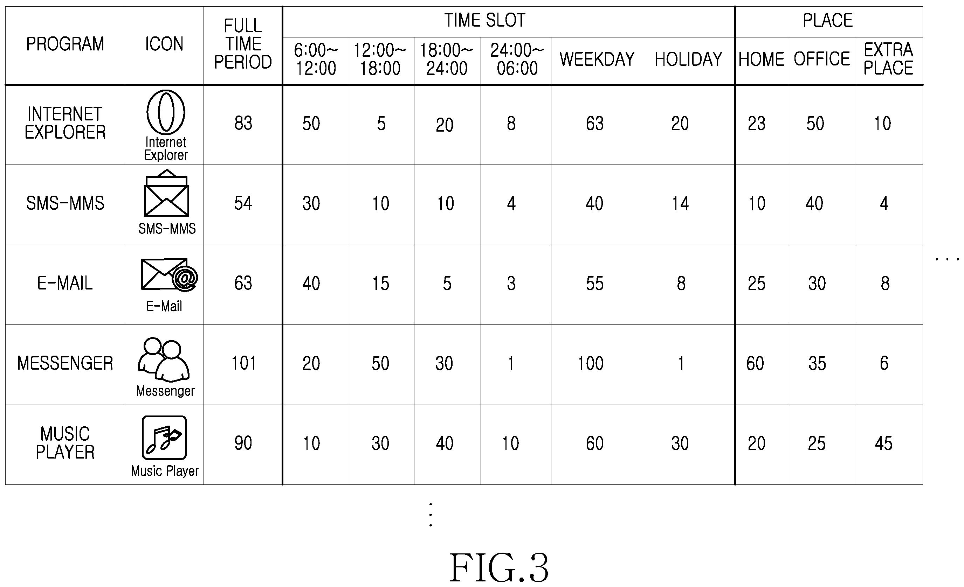

FIG. 3 is a table illustrating an amount of usage time of each program according to a first exemplary embodiment of the present invention. As described above, the amount of usage time of each program is stored and updated during a pre-set time period.

Referring to FIG. 3, the time-related criterion may be a full time period, a time slot, a day of the week, etc. In addition, the place-related criterion may be a home, an office, an extra place such as a restaurant, a hotel, etc. When using the full time period as the time-related criterion, the controller 15 calculates a total amount of time used by each program during the pre-set time period. Further, when using the time slot as the time-related criterion, the controller 15 calculates an amount of time used by each program with respect to a predetermined time slot (e.g., 6:00-12:00, 12:00-18:00, 18:00-24:00, 24:00-6:00, a weekday, a holiday, etc.) during the pre-set time period. Furthermore, when using the aforementioned places (e.g., a home, an office, an extra place, etc.) as the place-related criterion, the controller 15 calculates the amount of time used by each program at each place during a pre-set time period.

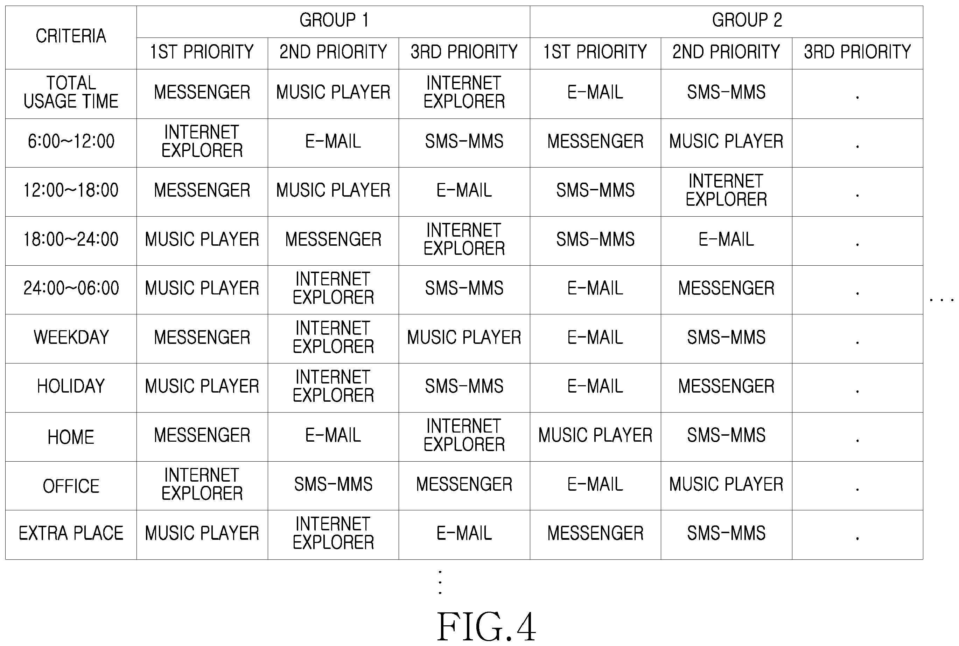

FIG. 4 illustrates an arrangement configuration of each program with reference to FIG. 3. The arrangement configuration according to the exemplary embodiment of the present invention is as follows.

Referring to FIG. 4, the arrangement configuration has at least one or more groups designated to be arranged sequentially from a right portion to a left portion of a screen, such as the screen 21 of the display unit 12, described herein with reference to FIGS. 1-2. As illustrated in FIG. 4, a first group designated Group 1 includes programs having a greater amount of usage time than that of a second group designated Group 2. In addition, other groups may be included, such that Group 2 includes programs having a greater amount of usage time than that of a third group which may be designated Group 3.

It is to be understood that other predetermined, default, or customizable arrangements of the icons 22 on the screen 21 may be implemented, such as having Group 1 icons arranged sequentially from left to right, or from top to bottom, etc.

The groups can include programs having priorities assigned according to the amount of usage time. That is, the priorities are assigned to programs in the group according to the amount of usage time. According to the exemplary embodiment, each group can include programs to which a plurality of priorities may be assigned. In the first exemplary embodiment shown in FIG. 4, three priorities (e.g., a first priority, a second priority, and a third priority) can be assigned. If at least two or more programs having the same amount of usage time are present, the same priority of the same group is assigned to the programs. In the same group, a program having a first priority has the greatest amount of usage time, a program having a second priority has the second greatest amount of usage time, and a program having a third priority has the smallest amount of usage time.

As described above, the controller 15 calculates the amount of usage time of each program according to the time-related criterion or the place-related criterion, and a group to which the respective programs belong is determined by using the calculated amount of usage time. Priorities are assigned to the programs included in each group according to the amount of usage time.

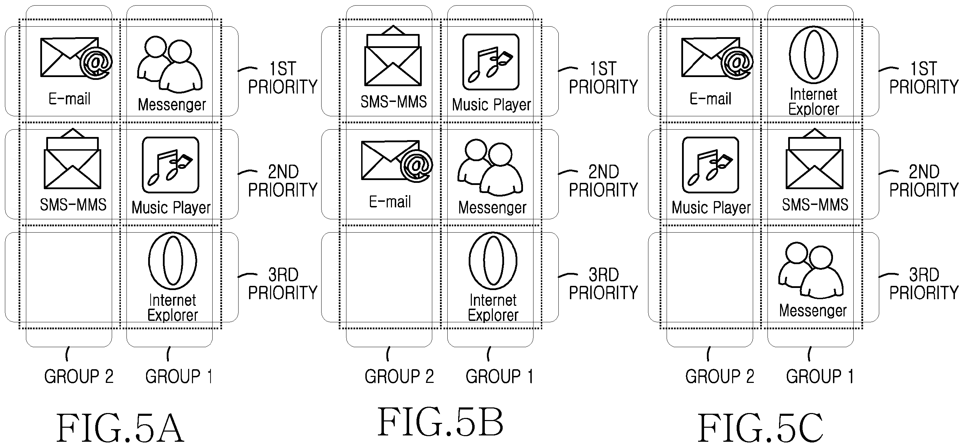

FIGS. 5A-5C illustrate screens on which icons corresponding to respective programs are arranged on the screen 21 in FIG. 2 with reference to the criteria, time slots, places, and groups shown in FIGS. 3-4. FIG. 5A illustrates a screen on which icons are arranged with respect to an amount of usage time by using a total time period as a criterion. FIG. 5B illustrates a screen on which icons are arranged with respect to an amount of usage time by using a time slot of 18:00 to 24:00 as a criterion. FIG. 5C illustrates a screen on which icons are arranged with respect to an amount of usage time by using an office as a criterion.

Referring to FIGS. 5A-5C, icons are arranged sequentially from a right portion to a left portion of the screen. The icons belonging to each group are arranged vertically so that an icon having a high priority is placed in an upper portion of the screen. A program having a high priority in the group implies that an amount of usage time is relatively greater than the usage of other programs.

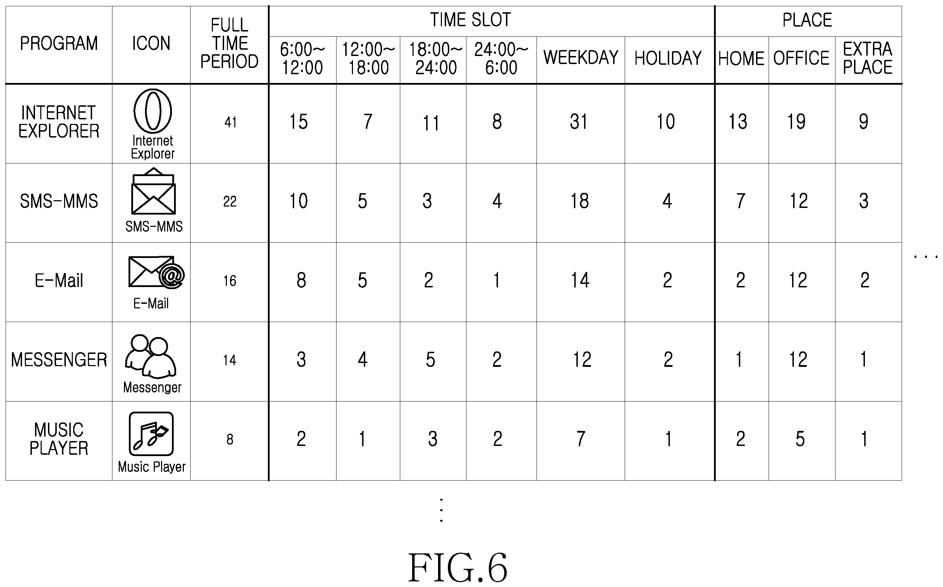

FIG. 6 illustrates the number of manipulations of each program according to a second exemplary embodiment of the present invention. As described above, the number of manipulations of each program is stored and updated during a pre-set time period.

Referring to FIG. 6, the time-related criterion may be a full time period, a time slot, a day of the week, etc. In addition, the place-related criterion may be a home, an office, an extra place such as a restaurant, a hotel, etc. When using the full time period as the time-related criterion, the controller 15 calculates the number of times of manipulating each program during the pre-set time period. When using the time slot, the controller 15 calculates the number of manipulations of each program with respect to a predetermined time slot (e.g., 6:00-12:00, 12:00-18:00, 18:00-24:00, 24:00-6:00, a weekday, a holiday, etc.) during the pre-set time period. Further, using the aforementioned places (e.g., a home, an office, an extra place, etc.) as the place-related criterion, the controller 15 calculates the number of manipulations of each program at each place during a pre-set time period.

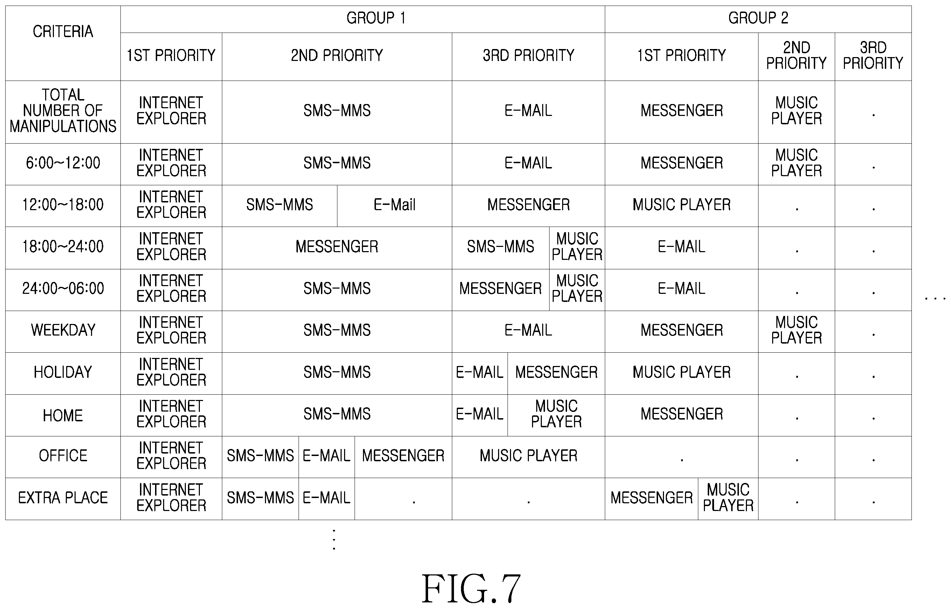

FIG. 7 illustrates an arrangement configuration of each program with reference to FIG. 6. The arrangement configuration according to the exemplary embodiment of the present invention is as follows.

Referring to FIG. 6, the arrangement configuration has at least one or more groups designated to be arranged sequentially from a right portion to a left portion of a screen, such as the screen 21 of the display unit 12, described herein with reference to FIGS. 1-2. As illustrated in FIG. 6, a first group designated Group 1 includes programs having a greater number of manipulations than that of a second group designated Group 2. In addition, other groups may be included, such that Group 2 includes programs having a greater number of manipulations than that of a third group which may be designated Group 3.

The groups can include programs to which a predetermined number of priorities can be assigned. That is, the priorities are assigned to programs in the group according to the number of manipulations. According to the exemplary embodiment, each group can include programs to which a plurality of priorities may be assigned. In the second exemplary embodiment shown in FIG. 7. three priorities (e.g., a first priority, a second priority, and a third priority) can be assigned. If at least two or more programs having the same amount of usage time are present, the same priority of the same group is assigned to the programs. In the same group, a program having a first priority has the greatest number of manipulations, a program having a second priority has the second greatest number of manipulations, and a program having a third priority has the smallest number of manipulations.

As described above, the controller 15 calculates the number of manipulations of each program according to the time-related criterion or the place-related criterion, and a group to which respective programs belong is determined by using the calculated number of manipulations. Priorities are assigned to the programs included in each group according to the number of manipulations.

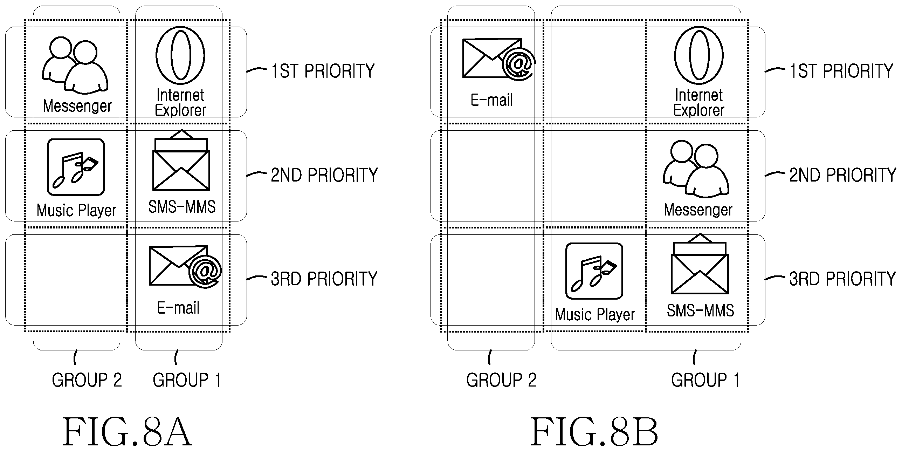

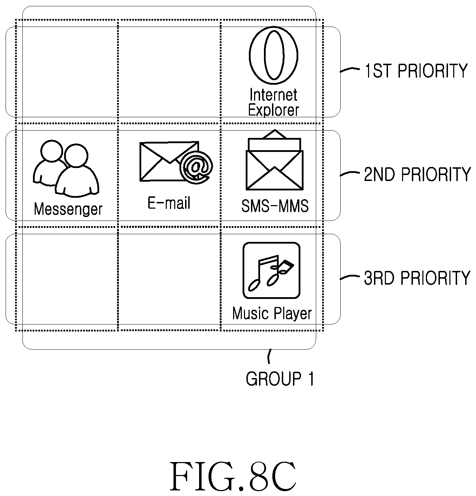

FIGS. 8A-8C illustrate screens on which icons corresponding to respective programs are arranged on the screen 21 in FIG. 2 with reference to the criteria, time slots, places, and groups shown in FIGS. 6-7. FIG. 8A illustrates a screen on which icons are arranged with respect to the number of manipulations by using a total time period as a criterion. FIG. 8B illustrates a screen on which icons are arranged with respect to the number of manipulations by using a time slot from 18:00 to 24:00 as a criterion. FIG. 8C illustrates a screen on which icons are arranged with respect to the number of manipulations by using an office as a criterion.

Referring to FIGS. 8A-8C, icons are arranged sequentially from a right portion to a left portion of the screen. The icons belonging to each group are arranged vertically so that an icon having a high priority is placed in an upper portion of the screen. A program having a high priority in the group implies that the number of manipulations is relatively high. As illustrated in FIG. 8B and FIG. 8C, icons (i.e., E-mail, Messenger, and SMS-MMS) of programs having the same priority in the same group are arranged in parallel horizontally.

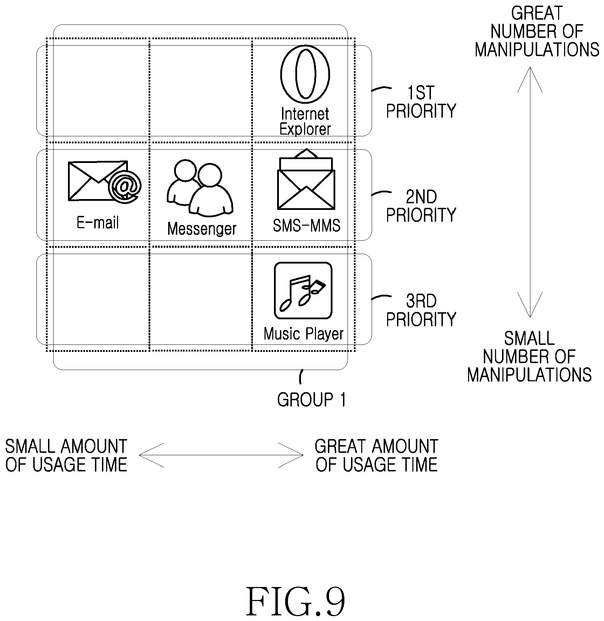

FIG. 9 illustrates arrangement of icons corresponding to respective programs with reference to FIG. 4 and FIG. 7. In FIG. 9, the icons are arranged with respect to the number of manipulations by using an office as a criterion.

Referring to FIG. 9, as described above, icons are arranged sequentially from a right portion to a left portion of the screen. The icons belonging to each group are arranged vertically so that an icon having a high priority is placed in an upper portion of the screen. However, icons (i.e., E-mail, Messenger, and SMS-MMS) having the same priority in a group are arranged with reference to FIG. 4 such that an icon having a great amount of usage time is placed in the rightward portion of the screen.

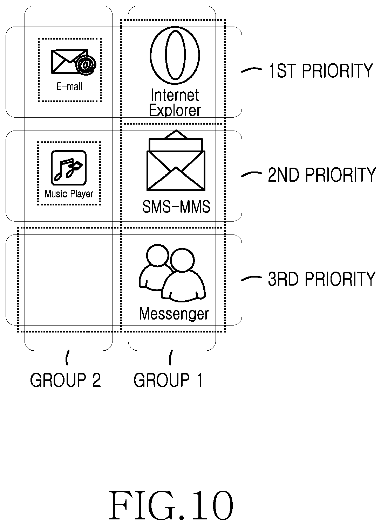

FIG. 10 illustrates arrangement of icons corresponding to respective programs with reference to FIG. 5. In FIG. 10, the icons are arranged with respect to an amount of usage time by using an office as a criterion.

Referring to FIG. 10, as described above, icons are arranged sequentially from a right portion to a left portion of the screen. The icons belonging to each group are arranged vertically so that an icon having a high priority is placed in an upper portion of the screen. However, icons in a group having a relatively small amount of usage time are displayed to have a noticeably smaller size than the icons with greater amounts of usage time. Further, icons can be displayed such that the greater the amount of usage time of the icon, the bigger and more noticeable the icon is displayed. In alternative embodiments, icons having greater usage time may be highlighted or displayed with a border having a first predetermined color, such as green, while icons having lesser usage time may be highlighted or displayed with a border having a second predetermined color, such as yellow. It is understood that the choice of color may be arbitrary, and multiple colors or color schemes may be used to distinguish high usage icons from low usage icons.

In a further alternative embodiment, icons with greater usage time may have a larger size as well as a first predetermined indicative color, while icons with lesser usage times may have a smaller size as well as a second predetermined indicative color. Other visual and/or audio characteristics associated with the icons, such as the shape of the icons or audible sounds generated when activating the icon, may be used in addition to or instead of using the size and color of the icons to provide the user with an indication that the program associated with an icons has a relatively greater or lesser usage time.

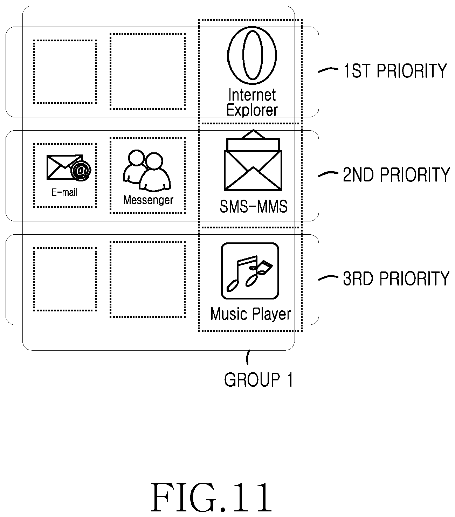

FIG. 11 illustrates arrangement of icons corresponding to respective programs with reference to FIG. 9. In FIG. 11, the icons are arranged with respect to the number of manipulations by using an office as a criterion.

Referring to FIG. 11, as described above, icons having the same priority in a group are arranged with reference to FIG. 4 such that an icon having a great amount of usage time is placed in a rightward portion of the screen. However, icons having the same priority in a group are displayed such that an icon having a relatively small amount of usage time is displayed in a small size. Further, icons having the same priority in one group are displayed such that the greater the amount of usage time of the icon, the bigger and more noticeable the icon is displayed.

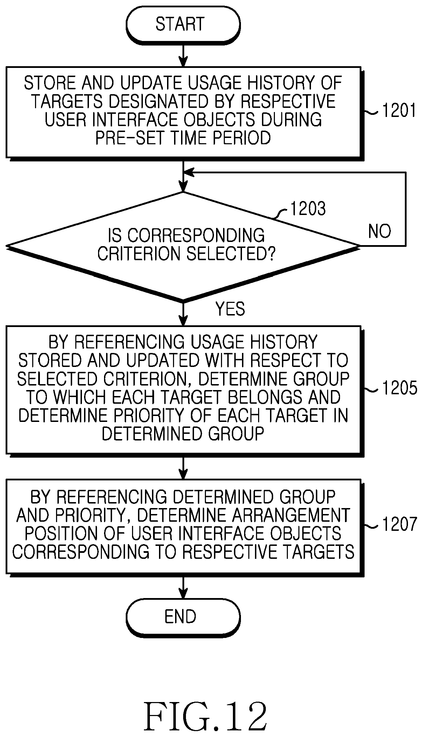

FIG. 12 is a flowchart illustrating a process of arranging a user interface object according to the exemplary embodiments of the present invention.

Referring to FIG. 12, in step 1201, the controller 15 provides control of the portable terminal, so that a usage history of targets; that is, programs designated by respective user interface objects is stored and updated with respect to at least one criterion during a pre-set time period. The user interface object may be an icon, and a target thereof may be a program associated with the icon. The usage history may include an amount of time used by the portable terminal, with the amount of time being measured after executing a program is completed or the number of occurrence of inputs generated by pressing a button or the like to use the program after the program is executed. As described above, the criterion may include a full time period, a time slot (e.g., 6:00-12:00, a weekday, a holiday, etc.), and a day of the week.

In step 1203, the controller 15 determines whether a criterion is selected. The criterion can be selected by a user directly from an environment configuration; that is, the criterion may be automatically detected by the time or place of the portable terminal associated with the user. In particular, as described above, upon arrival of a corresponding time slot, such as a range of time during the day, the controller 15 can select the arrived time slot as the criterion. Alternatively or in addition, upon detecting movement to a pre-defined place, the controller 15 can select the pre-defined place as the criterion. If no criterion is selected in step 1203, the method loops back to continue to check for a criterion selection in step 1203. Otherwise, once a criterion is selected, the method proceeds to step 1205.

In step 1205, by referencing the usage history stored and updated with respect to the selected criterion, the controller 15 determines a group to which each target belongs and determines a priority of each target in the determined group.

In step 1207, the controller 15 determines an arrangement position, on the screen, of a user interface object corresponding to each target by referencing the determined group and priority. According to the exemplary embodiment of the present invention, respective groups are designated to be arranged sequentially from a right portion to a left portion of the screen. Groups designated to be arranged in a rightward portion of the screen include programs having a greater amount of usage time or a greater number of manipulations than those of groups designated to be arranged in a leftward portion of the screen. In addition, the greater the amount of usage time or the number of manipulations, the higher the priority is assigned to each of programs in the group. Icons of programs to which a higher priority is assigned in a group are placed in a relatively upper portion of the screen. In addition, icons of at least two or more programs having the same priority in a group are arranged horizontally in such a manner that an icon of a program having a greater amount of usage time or having a greater number of manipulations is arranged in the rightward portion of the screen.

According to another exemplary embodiment of the present invention, the controller 15 can determine a group to which a user interface object of each target belongs by using the following method. The controller 15 calculates a sum value associated with each user interface object by applying a set of weight to each of the entries in a usage history of the respective user interface object for the selected criterion (e.g., a time slot, a place, etc.), and summing the weighted entries. Next, the controller 15 can determine a group and a priority in the group of each user interface object according to a magnitude of the calculated sum value. For example, the sum value can be calculated by using the following equation.

$$\text{Sum Value} \propto (\text{amount of usage time} \times \text{weight 1})$$
$$+ (\text{number of manipulations} \times \text{weight 2}) + ...$$

In the above equation, a unit of the amount of usage time may be hours but milliseconds, seconds, minutes, days or months may also be used according to the embodiments. In addition, user may set the weights of the items, i.e., the amount of usage time, the number of manipulations and etc. considering the significance of icon arrangement. Icons may be arranged as follows. The arrangement configuration has at least one or more groups designated to be arranged sequentially from a right portion to a left portion of a screen, such as the screen 21 of the display unit 12, described herein with reference to FIGS. 1-2. A first group designated Group 1 includes icons of programs having a greater sum values than that of a second group designated Group 2. The groups may include icons of programs to which a predetermined number of priorities may be assigned. That is, the priorities are assigned to icons of programs in the group according to the sum values. According to the exemplary embodiment, each group may include icons of programs to which a plurality of priorities may be assigned.

In conclusion, the present invention can arrange placement of a user interface object on a screen of a portable terminal on the basis of personalized service and use of the user interface objects with the portable terminal.

The above-described apparatus and methods according to the present invention can be implemented in hardware, firmware or as software or computer code that can be stored in a recording medium such as a CD ROM, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the present invention has been particularly shown and described with reference to exemplary embodiments thereof, it will be understood by those skilled in the art that various changes in form and details may be made therein without departing from the scope of the present invention as defined by the appended claims.

**Claims**

1. A method of arranging user interface objects on a screen of a portable terminal, the method comprising:

   storing and updating a usage history of a plurality of programs respectively associated with the user interface objects during a pre-set time period according to at least one time-related criterion and/or at least one place-related criterion (1201);
   selecting a selected criterion from the at least one time-related criterion or the at least one place-related criterion (1203); and
   determining an arrangement position of each user interface object corresponding to each program by referencing the usage history stored and updated with respect to the selected criterion,
   **characterised in that**
   the usage history includes an amount of usage time and a number of manipulations of each program after the program is executed upon selecting the associated user interface object.

2. The method of claim 1, wherein in the selecting (1203) of the selected criterion, upon arrival of a pre-defined time slot, an arrived time slot is selected as the selected criterion, or upon detecting movement of the portable terminal to a pre-defined place, the pre-defined place is selected as the selected criterion.

3. The method of claim 1, wherein the determining of the arrangement position comprises:

   determining a group to which each program belongs, by referencing the amount of usage time or the number of manipulations of each program with respect to the selected criterion (1205);
   determining a priority of each program belonging to the determined group, by referencing the amount of usage time or the number of manipulations of each program with respect to the selected criterion; and
   determining the arrangement position of the respective user interface object corresponding to each program, by referencing the group to which each program belongs and the determined priority of the group (1207).

4. The method of claim 3, wherein in the determining of the group to which each program belongs (1207), each program having an associated priority assigned according to the amount of usage time or the number of manipulations of each program is selected and included in a corresponding group wherein each program is designated to a higher group when the amount of usage time or the number of manipulations is greater than the usage time or manipulations of at least one other program.

**5.** The method of claim 4, wherein in the determining of the arrangement position (1207), each user interface object corresponding to a program belonging to a higher group is arranged in a rightward portion of the screen or is displayed with an appearance different from the appearance of at least one other user interface object.

**6.** The method of claim 4, wherein in the determining of the priority of each program (1205), a greater amount of usage time or a greater number of manipulations of each program determines a higher priority assigned to each respective program.

**7.** The method of claim 6, wherein in the determining of the arrangement position (1207), each user interface object corresponding to a respective program, to which a high priority is assigned, is arranged in an upper portion of the screen or is displayed with an appearance different from the appearance of at least one other user interface object.

**8.** The method of claim 6, wherein in the determining of the arrangement position (1207), a pair of user interface objects for at least two or more programs to which the same priority is assigned in a group are arranged horizontally, and a first user interface object for a corresponding program having a high amount of usage time or a high number of manipulations is arranged in a rightward portion of the screen or is displayed with an appearance different from the appearance of at least one other user interface object.

**9.** The method of claim 1, wherein in the determining of the arrangement position (1207), the arrangement position of the user interface object corresponding to each program is determined according to a predetermined equation applied to the usage history for each program.

**10.** The method of claim 1, wherein in the determining of the arrangement position (1207), a user interface object corresponding to a program having a relatively high amount of usage time is located in a rightward portion of the screen, and a user interface object corresponding to a program having a relatively high number of manipulations is located in an upper portion of the screen.

**11.** The method of claim 1, wherein the at least one time-related criterion or place-related criterion includes at least one of a full time period, a time slot, a day of the week, and a defined place.

**12.** The method of claim 1, wherein the user interface objects are icons.

**13.** A portable terminal comprising an input unit (11) for inputting data, a display unit (12) for outputting display data, a storage unit (13) for storing data, a location information receiver (14) for receiving location information, and a controller (15) for controlling an overall operation, wherein the controller (15) is further arranged

- to store and update a usage history of a plurality of programs respectively associated with user interface objects during a pre-set time period according to at least one time-related and/or place-related criterion,
- to select a selected criterion from the at least one time-related or the at least one place-related criterion, and
- to determine an arrangement position of each user interface object corresponding to each program by referencing the usage history stored and updated with respect to the selected criterion,

**characterised in that**
the usage history includes an amount of usage time and a number of manipulations of each program after the program is executed upon selecting the associated user interface object.

**14.** A computer program product, which is stored on a computer readable storage media, and which is suitable to perform the method according to claim 1 to 12, when it is run on a portable terminal.

**Patentansprüche**

**1.** Verfahren zum Anordnen von Benutzerschnittstellen-Objekten auf einem Bildschirm eines tragbaren Endgeräts, wobei das Verfahren Folgendes umfasst:

Speichern und Aktualisieren einer Nutzungsgeschichte einer Vielzahl von Programmen, die jeweils mit den Benutzerschnittstellenobjekten während einer voreingestellten Zeitspanne zugeordnet sind, die mindestens einem zeitbezogenen Kriterium und/oder mindestens einem ortsbezogenen Kriterium (1201) entspricht;

Auswahl eines ausgewählten Kriteriums aus dem mindestens einen zeitbezogenen Kriterium oder dem mindestens einen ortsbezogenen Kriterium (1203); und

Ermittlung einer Anordnungsposition jedes Benutzerschnittstellenobjekts entsprechend jedem Programm, durch Referenzierung der gespeicherten Nutzungsgeschichte und Aktualisierung in Bezug auf das ausgewählte Kriterium, **dadurch gekennzeichnet, dass**

die Nutzungsgeschichte eine Menge an Nutzungszeit und eine Zahl von Manipulationen jedes Programms umfasst, nachdem das Programm ausgeführt wurde, nach Auswahl des zugeordneten Benutzerschnittstellenobjekts.

2.  Verfahren nach Anspruch 1, wobei bei der Auswahl (1203) des ausgewählten Kriteriums, bei Erreichen eines vordefinierten Zeitschlitzes, ein erreichter Zeitschlitz als das ausgewählte Kriterium ausgewählt wird, oder bei Entdeckung einer Bewegung des tragbaren Endgeräts zu einer vordefinierten Stelle wird die vordefinierte Stelle als das ausgewählte Kriterium ausgewählt.

3.  Verfahren nach Anspruch 1, wobei die Ermittlung der Anordnungsposition Folgendes umfasst:

Ermittlung einer Gruppe, zu der jedes Programm gehört, durch Referenzierung der Menge an Nutzungszeit oder der Zahl von Manipulationen jedes Programms in Bezug auf das ausgewählte Kriterium (1205);

Ermittlung einer Priorität jedes Programms, das der ermittelten Gruppe angehört, durch Referenzierung der Menge an Nutzungszeit oder der Zahl von Manipulationen jedes Programms in Bezug auf das ausgewählte Kriterium; und

Ermittlung der Anordnungsposition des betreffenden Benutzerschnittstellenobjekts, das jedem Programm entspricht, durch Referenzierung der Gruppe, zu welcher jedes Programm gehört, und der ermittelten Priorität der Gruppe (1207).

4.  Verfahren nach Anspruch 3, wobei bei der Ermittlung der Gruppe, zu welcher jedes Programm gehört (1207), jedes Programm, das eine zugeordnete Priorität hat, die entsprechend der Menge an Nutzungszeit oder der Zahl von Manipulationen jedes Programms zugeteilt wurde, ausgewählt wird und in eine entsprechende Gruppe eingefügt wird, wobei jedes Programm einer höheren Gruppe zugewiesen wird, wenn die Menge an Nutzungszeit oder die Zahl von Manipulationen größer ist als die Nutzungszeit oder die Manipulationen mindestens eines anderen Programms.

5.  Verfahren nach Anspruch 4, wobei bei der Ermittlung der Anordnungsposition (1207) jedes Benutzerschnittstellenobjekt, das einem Programm entspricht, das einer höheren Gruppe angehört, in einem rechten Teil des Bildschirms angeordnet ist oder mit einem anderen Erscheinungsbild als das Erscheinungsbild mindestens eines anderen Benutzerschnittstellenobjekts angezeigt wird.

6.  Verfahren nach Anspruch 4, wobei bei der Ermittlung der Priorität jedes Programms (1205) eine größere Menge an Nutzungszeit oder eine größere Zahl von Manipulationen jedes Programms zu einer höheren Priorität führt, die jedem betreffenden Programm zugeteilt wird.

7.  Verfahren nach Anspruch 6, wobei bei der Ermittlung der Anordnungsposition (1207) jedes Benutzerschnittstellenobjekt, das einem betreffenden Programm entspricht, dem eine hohe Priorität zugeteilt ist, in einem oberen Teil des Bildschirms angeordnet ist oder mit einem anderen Erscheinungsbild als das Erscheinungsbild mindestens eines anderen Benutzerschnittstellenobjekts angezeigt wird.

8.  Verfahren nach Anspruch 6, wobei bei der Ermittlung der Anordnungsposition (1207) ein Paar von Benutzerschnittstellenobjekten für mindestens zwei oder mehr Programme, denen dieselbe Priorität in einer Gruppe zugeteilt ist, horizontal angeordnet ist, und ein erstes Benutzerschnittstellenobjekt für ein entsprechendes Programm mit einer hohen Menge an Nutzungszeit oder einer hohen Zahl von Manipulationen in einem rechten Teil des Bildschirms angeordnet ist oder mit einem anderen Erscheinungsbild als das Erscheinungsbild mindestens eines anderen Benutzerschnittstellenobjekts angezeigt wird.

9.  Verfahren nach Anspruch 1, wobei bei der Ermittlung der Anordnungsposition (1207) die Anordnungsposition des Benutzerschnittstellenobjekts, das jedem Programm entspricht, entsprechend einer vorherbestimmten Gleichung ermittelt wird, die auf die Nutzungsgeschichte für jedes Programm angewandt wird.

10. Verfahren nach Anspruch 1, wobei bei der Ermittlung der Anordnungsposition (1207) ein Benutzerschnittstellenobjekt, das einem Programm mit einer verhältnismäßig hohen Menge an Nutzungszeit entspricht, in einem rechten Teil des Bildschirms positioniert wird, und ein Benutzerschnittstellenobjekt, das einem Programm mit einer verhältnismäßig hohen Zahl von Manipulationen entspricht, in einem oberen Teil des Bildschirms positioniert wird.

**11.** Verfahren nach Anspruch 1, wobei das mindestens eine zeitbezogene Kriterium oder ortsbezogene Kriterium mindestens einen Zeitbereich, einen Zeitschlitz, einen Wochentag und einen definierten Ort umfasst.

**12.** Verfahren nach Anspruch 1, wobei die Benutzerschnittstellenobjekte Icone sind.

**13.** Tragbares Endgerät mit einer Eingabeeinheit (11) zur Eingabe von Daten, einer Bildschirmeinheit (12) zur Ausgabe von Bildschirmdaten, einer Speichereinheit (13) zum Speichern von Daten, einem Standortinformations-Empfänger (14) zum Empfang von Standortinformationen und einer Steuervorrichtung (15) zur Steuerung eines Gesamtbetriebs, wobei die Steuervorrichtung (15) des Weiteren angeordnet ist, um

- eine Nutzungsgeschichte einer Vielzahl von Programmen zu speichern und zu aktualisieren, die jeweils während einer voreingestellten Zeitspanne entsprechend mindestens einem zeitbezogenen und/oder ortsbezogenen Kriterium Benutzerschnittstellenobjekten zugeordnet sind,
- ein ausgewähltes Kriterium aus dem mindestens einen zeitbezogenen oder dem mindestens einen ortsbezogenen Kriterium auszuwählen, und
- eine Anordnungsposition jedes Benutzerschnittstellenobjekts zu ermitteln, entsprechend jedem Programm, durch Referenzierung der Nutzungsgeschichte, die in Bezug auf das ausgewählte Kriterium gespeichert und aktualisiert wird,

**dadurch gekennzeichnet, dass**
die Nutzungsgeschichte eine Menge an Nutzungszeit und eine Zahl von Manipulationen jedes Programms umfasst, nachdem das Programm nach Auswahl des zugeordneten Benutzerschnittstellenobjekts ausgeführt wurde.

**14.** Computerprogrammprodukt, das auf einem computerlesbaren Speichermedium gespeichert ist und geeignet ist, das Verfahren nach Anspruch 1 bis 12 auszuführen, wenn es auf einem tragbaren Endgerät betrieben wird.

**Revendications**

**1.** Procédé d'agencement d'objets d'interface d'utilisateur sur un écran d'un terminal portable, le procédé comprenant :

stocker et mettre à jour un historique d'utilisation d'une pluralité de programmes associés respectivement aux objets d'interface d'utilisateur pendant une période de temps préétablie en fonction d'au moins un critère lié au temps et / ou d'au moins un critère lié au lieu (1201) ;
sélectionner un critère choisi parmi l'au moins un critère lié au temps ou l'au moins un critère lié au lieu (1203) ; et
déterminer une position d'agencement de chaque objet d'interface d'utilisateur correspondant à chaque programme en se référant à l'historique d'utilisation stocké et mis á jour par rapport au critère sélectionné,
**caractérisé en ce que**
l'historique d'utilisation comprend une quantité de temps d'utilisation et un certain nombre de manipulations de chaque programme après que le programme est exécuté lors de la sélection de l'objet d'interface d'utilisateur associé.

**2.** Procédé selon la revendication 1, où lors de la sélection (1203) du critère choisi, à l'arrivée d'un intervalle de temps prédéfini, un intervalle de temps arrivé est sélectionné en tant que critère sélectionné, ou lors de la détection de mouvement du terminal portable à un lieu prédéfini, le lieu prédéfini est sélectionné en tant que critère sélectionné.

**3.** Procédé selon la revendication 1, où la détermination de la position d'agencement comprend :

déterminer un groupe auquel chaque programme appartient, en se référant à la quantité de temps d'utilisation ou au nombre de manipulations de chaque programme par rapport au critère sélectionné (1205) ;
déterminer une priorité de chaque programme appartenant au groupe déterminé, en se référant à la quantité de temps d'utilisation ou au nombre de manipulations de chaque programme par rapport au critère sélectionné ; et
déterminer la position d'agencement de l'objet d'interface d'utilisateur respectif correspondant à chaque programme, en faisant référence au groupe auquel chaque programme appartient et à la priorité déterminée du groupe (1207).

4. Procédé selon la revendication 3, où lors de la détermination du groupe auquel chaque programme appartient (1207), chaque programme ayant une priorité associée assignée en fonction de la quantité de temps d'utilisation ou du nombre de manipulations de chaque programme est sélectionné et inclus dans un groupe correspondant où chaque programme est désigné à un groupe supérieur lorsque la quantité de temps d'utilisation ou le nombre de manipulations est supérieur au temps d'utilisation ou aux manipulations d'au moins un autre programme.

5. Procédé selon la revendication 4, où lors de la détermination de la position d'agencement (1207), chaque objet d'interface d'utilisateur correspondant à un programme appartenant à un groupe supérieur est agencé dans une partie du côté droit de l'écran ou est affiché avec une apparence différente de l'apparence d'au moins un autre objet d'interface d'utilisateur.

6. Procédé selon la revendication 4, où lors de la détermination de la priorité de chaque programme (1205), une quantité supérieure de temps d'utilisation ou un nombre supérieur de manipulations de chaque programme détermine une priorité supérieure assignée à chaque programme respectif.

7. Procédé selon la revendication 6, où lors de la détermination de la position d'agencement (1207), chaque objet d'interface d'utilisateur correspondant à un programme respectif, auquel une haute priorité est assignée, est agencé dans une partie supérieure de l'écran ou est affiché avec une apparence différente de l'apparence d'au moins un autre objet d'interface d'utilisateur.

8. Procédé selon la revendication 6, où lors de la détermination de la position d'agencement (1207), une paire d'objets d'interface d'utilisateur pour au moins deux ou plusieurs programmes auxquels la même priorité est assignée dans un groupe sont agencés horizontalement, et un premier objet d'interface d'utilisateur pour un programme correspondant ayant une grande quantité de temps d'utilisation ou un grand nombre de manipulations est agencé dans une partie du côté droit de l'écran ou est affiché avec une apparence différente de l'apparence d'au moins un autre objet d'interface d'utilisateur.

9. Procédé selon la revendication 1, où lors de la détermination de la position d'agencement (1207), la position d'agencement de l'objet d'interface d'utilisateur qui correspond à chaque programme est déterminée selon une équation prédéterminée appliquée à l'historique d'utilisation pour chaque programme.

10. Procédé selon la revendication 1, où lors de la détermination de la position d'agencement (1207), un objet d'interface d'utilisateur qui correspond à un programme ayant une quantité relativement élevée de temps d'utilisation est situé dans une partie du côté droit de l'écran, et un objet d'interface d'utilisateur qui correspond à un programme ayant un nombre relativement élevé de manipulations est situé dans une partie supérieure de l'écran.

11. Procédé selon la revendication 1, où l'au moins un critère lié au temps ou un critère lié au lieu comprend au moins l'un parmi une période de temps complète, un intervalle de temps, un jour de la semaine et un lieu défini.

12. Procédé selon la revendication 1, où les objets d'interface d'utilisateur sont des icônes.

13. Terminal portable comprenant une unité d'entrée (11) pour entrer des données, une unité d'affichage (12) pour produire des données d'affichage, une unité de stockage (13) pour stocker des données, un récepteur d'informations de localisation (14) pour recevoir des informations de localisation, et un contrôleur (15) pour commander un fonctionnement global, où le contrôleur (15) est, en outre, agencé

  - pour stocker et mettre à jour un historique d'utilisation d'une pluralité de programmes associés respectivement à des objets d'interface d'utilisateur pendant une période de temps préétablie en fonction d'au moins un critère lié au temps et / ou au lieu,
  - pour sélectionner un critère sélectionné parmi l'au moins un critère lié au temps ou l'au moins un critère lié au lieu, et
  - pour déterminer une position d'agencement de chaque objet d'interface d'utilisateur correspondant à chaque programme en se référant à l'historique d'utilisation stocké et mis à jour par rapport au critère sélectionné,

**caractérisé en ce que**

l'historique d'utilisation comprend une quantité de temps d'utilisation et un nombre de manipulations de chaque programme après que le programme est exécuté lors de la sélection de l'objet d'interface d'utilisateur associé.

14. Produit de programme informatique, qui est stocké sur un support de stockage lisible par ordinateur, et qui est adapté pour effectuer le procédé selon la revendication 1 à 12, lorsqu'il est exécuté sur un terminal portable.

FIG.1

Windows Live
SMS-MMS
E-mail
Communities
RSS Reader
Music Player
Messenger
Podcast
Internet Explorer

09:00

21

22

FIG.2

| PROGRAM | ICON | FULL TIME PERIOD | TIME SLOT | | | | | | PLACE | | |
|---|---|---|---|---|---|---|---|---|---|---|---|
| | | | 6:00~ 12:00 | 12:00~ 18:00 | 18:00~ 24:00 | 24:00~ 06:00 | WEEKDAY | HOLIDAY | HOME | OFFICE | EXTRA PLACE |
| INTERNET EXPLORER | Internet Explorer | 83 | 50 | 5 | 20 | 8 | 63 | 20 | 23 | 50 | 10 |
| SMS-MMS | SMS-MMS | 54 | 30 | 10 | 10 | 4 | 40 | 14 | 10 | 40 | 4 |
| E-MAIL | E-Mail | 63 | 40 | 15 | 5 | 3 | 55 | 8 | 25 | 30 | 8 |
| MESSENGER | Messenger | 101 | 20 | 50 | 30 | 1 | 100 | 1 | 60 | 35 | 6 |
| MUSIC PLAYER | Music Player | 90 | 10 | 30 | 40 | 10 | 60 | 30 | 20 | 25 | 45 |

...

⋮

# FIG.3

EP 2 549 725 B1

| CRITERIA | GROUP 1 | | | GROUP 2 | | |
|---|---|---|---|---|---|---|
| | 1ST PRIORITY | 2ND PRIORITY | 3RD PRIORITY | 1ST PRIORITY | 2ND PRIORITY | 3RD PRIORITY |
| TOTAL USAGE TIME | MESSENGER | MUSIC PLAYER | INTERNET EXPLORER | E-MAIL | SMS-MMS | . |
| 6:00~12:00 | INTERNET EXPLORER | E-MAIL | SMS-MMS | MESSENGER | MUSIC PLAYER | . |
| 12:00~18:00 | MESSENGER | MUSIC PLAYER | E-MAIL | SMS-MMS | INTERNET EXPLORER | . |
| 18:00~24:00 | MUSIC PLAYER | MESSENGER | INTERNET EXPLORER | SMS-MMS | E-MAIL | . |
| 24:00~06:00 | MUSIC PLAYER | INTERNET EXPLORER | SMS-MMS | E-MAIL | MESSENGER | . |
| WEEKDAY | MESSENGER | INTERNET EXPLORER | MUSIC PLAYER | E-MAIL | SMS-MMS | . |
| HOLIDAY | MUSIC PLAYER | INTERNET EXPLORER | SMS-MMS | E-MAIL | MESSENGER | . |
| HOME | MESSENGER | E-MAIL | INTERNET EXPLORER | MUSIC PLAYER | SMS-MMS | . |
| OFFICE | INTERNET EXPLORER | SMS-MMS | MESSENGER | E-MAIL | MUSIC PLAYER | . |
| EXTRA PLACE | MUSIC PLAYER | INTERNET EXPLORER | E-MAIL | MESSENGER | SMS-MMS | . |

⋯

⋮

FIG.4

EP 2 549 725 B1

E-mail

Messenger — 1ST PRIORITY

SMS-MMS

Music Player — 2ND PRIORITY

Internet Explorer — 3RD PRIORITY

GROUP 2    GROUP 1

FIG.5A

SMS-MMS

Music Player — 1ST PRIORITY

E-mail

Messenger — 2ND PRIORITY

Internet Explorer — 3RD PRIORITY

GROUP 2    GROUP 1

FIG.5B

E-mail

Internet Explorer — 1ST PRIORITY

Music Player

SMS-MMS — 2ND PRIORITY

Messenger — 3RD PRIORITY

GROUP 2    GROUP 1

FIG.5C

EP 2 549 725 B1

| PROGRAM | ICON | FULL TIME PERIOD | TIME SLOT | | | | | | PLACE | | |
|---|---|---|---|---|---|---|---|---|---|---|---|
| | | | 6:00~ 12:00 | 12:00~ 18:00 | 18:00~ 24:00 | 24:00~ 6:00 | WEEKDAY | HOLIDAY | HOME | OFFICE | EXTRA PLACE |
| INTERNET EXPLORER | Internet Explorer | 41 | 15 | 7 | 11 | 8 | 31 | 10 | 13 | 19 | 9 |
| SMS-MMS | SMS-MMS | 22 | 10 | 5 | 3 | 4 | 18 | 4 | 7 | 12 | 3 |
| E-Mail | E-Mail | 16 | 8 | 5 | 2 | 1 | 14 | 2 | 2 | 12 | 2 |
| MESSENGER | Messenger | 14 | 3 | 4 | 5 | 2 | 12 | 2 | 1 | 12 | 1 |
| MUSIC PLAYER | Music Player | 8 | 2 | 1 | 3 | 2 | 7 | 1 | 2 | 5 | 1 |

⋮

FIG.6

| CRITERIA | GROUP 1 | | | GROUP 2 | | |
|---|---|---|---|---|---|---|
| | 1ST PRIORITY | 2ND PRIORITY | 3RD PRIORITY | 1ST PRIORITY | 2ND PRIORITY | 3RD PRIORITY |
| TOTAL NUMBER OF MANIPULATIONS | INTERNET EXPLORER | SMS-MMS | E-MAIL | MESSENGER | MUSIC PLAYER | . |
| 6:00~12:00 | INTERNET EXPLORER | SMS-MMS | E-MAIL | MESSENGER | MUSIC PLAYER | . |
| 12:00~18:00 | INTERNET EXPLORER | SMS-MMS / E-Mail | MESSENGER | MUSIC PLAYER | . | . |
| 18:00~24:00 | INTERNET EXPLORER | MESSENGER | SMS-MMS / MUSIC PLAYER | E-MAIL | . | . |
| 24:00~06:00 | INTERNET EXPLORER | SMS-MMS | MESSENGER / MUSIC PLAYER | E-MAIL | . | . |
| WEEKDAY | INTERNET EXPLORER | SMS-MMS | E-MAIL | MESSENGER | MUSIC PLAYER | . |
| HOLIDAY | INTERNET EXPLORER | SMS-MMS | E-MAIL / MESSENGER | MUSIC PLAYER | . | . |
| HOME | INTERNET EXPLORER | SMS-MMS | E-MAIL / MUSIC PLAYER | MESSENGER | . | . |
| OFFICE | INTERNET EXPLORER | SMS-MMS / E-MAIL / MESSENGER | MUSIC PLAYER | . | . | . |
| EXTRA PLACE | INTERNET EXPLORER | SMS-MMS / E-MAIL | . | MESSENGER / MUSIC PLAYER | . | . |

:

FIG.7

FIG.8A

FIG.8B

EP 2 549 725 B1

1ST PRIORITY

2ND PRIORITY

3RD PRIORITY

Internet Explorer

Messenger    E-mail    SMS-MMS

Music Player

GROUP 1

FIG.8C

GREAT
NUMBER OF
MANIPULATIONS

Internet
Explorer — 1ST PRIORITY

E-mail   Messenger   SMS-MMS — 2ND PRIORITY

Music Player — 3RD PRIORITY

GROUP 1

SMALL
NUMBER OF
MANIPULATIONS

SMALL AMOUNT
OF USAGE TIME ←————→ GREAT AMOUNT
OF USAGE TIME

FIG.9

E-mail

Internet
Explorer

1ST PRIORITY

Music Player

SMS-MMS

2ND PRIORITY

Messenger

3RD PRIORITY

GROUP 2    GROUP 1

FIG.10

FIG.11

START

STORE AND UPDATE USAGE HISTORY OF
TARGETS DESIGNATED BY RESPECTIVE
USER INTERFACE OBJECTS DURING
PRE-SET TIME PERIOD ⌐1201

IS CORRESPONDING
CRITERION SELECTED? ⌐1203    NO

YES

BY REFERENCING USAGE HISTORY
STORED AND UPDATED WITH RESPECT TO
SELECTED CRITERION, DETERMINE GROUP
TO WHICH EACH TARGET BELONGS AND
DETERMINE PRIORITY OF EACH TARGET IN
DETERMINED GROUP ⌐1205

BY REFERENCING DETERMINED GROUP
AND PRIORITY, DETERMINE ARRANGEMENT
POSITION OF USER INTERFACE OBJECTS
CORRESPONDING TO RESPECTIVE TARGETS ⌐1207

END

FIG.12

**EP 2 549 725 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010062811 A1
- EP 2154602 A1

- US 2011138328 A1